# EUROPÄISCHE PATENTSCHRIFT

(11) **EP 3 002 254 B1**
(45) Veröffentlichungstag und Bekanntmachung des Hinweises auf die Patenterteilung: **02.08.2017**
(21) Anmeldenummer: 15185474.2
(22) Anmeldetag: 16.09.2015
(51) Int. Cl.: C02F 1/00, C02F 1/467

(54) **VERFAHREN ZUM BETRIEB EINES RÜCKSPÜLBAREN WASSERFILTERS MIT ELEKTROLYTISCHER REINIGUNGSFUNKTION**
PROCESS OF OPERATING A FLUSHABLE WATER FILTER WITH ELECTROLYTIC CLEANING FUNCTION
PROCÉDÉ DE FONCTIONNEMENT D'UN FILTRE D'EAU A RÉTROLAVAGE DOTÉ D'UNE FONCTION DE NETTOYAGE ÉLECTROLYTIQUE

(30) Priorität: 25.09.2014 DE 102014219446
(43) Veröffentlichungstag der Anmeldung: 06.04.2016
(73) Patentinhaber: Judo Wasseraufbereitung GmbH, 71364 Winnenden (DE)
(72) Erfinder: Pantow, Christian, 71364 Winnenden (DE); Neidhardt, Klaus, 71577 Großerlach (DE)
(74) Vertreter: Kohler Schmid Möbus Patentanwälte

(56) Entgegenhaltungen:
- EP-A2- 2 298 441
- DE-A1-102006 029 544
- US-A- 6 045 704

## Beschreibung

Die Erfindung betrifft ein Verfahren zum Betrieb eines rückspülbaren Wasserfilters, wobei der Wasserfilter einen Siebfiltereinsatz in einem wasserführenden Gehäuse aufweist, wobei der Siebfiltereinsatz das Gehäuse in eine Einlasskammer und eine Auslasskammer unterteilt, und wobei der Wasserfilter eine Absaugvorrichtung in der Einlasskammer aufweist.

Ein solcher Wasserfilter ist beispielsweise aus der EP 1 872 841 B1 und aus der DE 10 2006 029 544 A1 bekannt geworden. Wasserfilter, wie sie üblicherweise in einer Trinkwasserinstallation eingesetzt werden, filtern ungelöste Partikel wie Rostteilchen oder Sandkörner aus dem Wasser. Die Partikel bleiben dabei an einem Siebfilter mit Durchlässen, die enger sind als die auszufilternden Partikel, hängen. Diese Filtration führt in Abhängigkeit von der Betriebszeit und der Wasserqualität zum Aufbau eines so genannten Filterkuchens am Siebfilter.

Der Filterkuchen kann unter ungünstigen Betriebsbedingungen neben anorganischen Partikeln mit zunehmender Porenfeinheit des Filterkuchens auch Mikroorganismen aus dem Wasser herausfiltern.

Um einer Verkeimung (und auch einer Verstopfung) des Siebfilters vorzubeugen, sind rückspülbare Wasserfilter bekannt geworden, wobei der Siebfilter im Rückspülbetrieb umgekehrt durchflossen wird wie im normalen Filterbetrieb. Typischerweise rastert dabei eine Absaugvorrichtung die Siebfilterfläche ab, wobei nur unter der Absaugvorrichtung der rückspülende Wasserfluss stattfindet. Bei der Rückspülung wird der Filterkuchen abgelöst und ausgespült. Einen solchen rückspülbaren Wasserfilter beschreibt beispielsweise die EP 1 110 589 B1.

Die mechanische Abreinigung des Siebfilters durch Rückspülung kann unter ungünstigen Bedingungen (etwa bei geringem Spüldruck, zu kurzen Rückspülzeiten oder schlechter Anpassung der Absaugvorrichtung an die Filtergeometrie) unvollständig sein, so dass Reste des Filterkuchens am Siebfilter verbleiben. Ebenso kann die Rückspülung bei manueller Durchführung vergessen werden. Dann besteht die Gefahr, dass es am Siebfilter zu einem unerwünschten Wachstum von Mikroorganismen kommt.

Die EP 0 681 994 B1 und die EP 1 872 841 B1 beschreiben Wasserfilter mit einer Silberbeschichtung am Siebfiltereinsatz. Die Silberbeschichtung besitzt eine keimtötende Wirkung, wodurch das Wachstum von Mikroorganismen am Siebfiltereinsatz verhindert oder zumindest vermindert wird. Nachteilig bei diesen Wasserfiltern ist die begrenzte Wirkdauer der Silberbeschichtung.

DE 10 2005 060 318 A1 beschreibt einen Aufhärtungsfilter, insbesondere für die Behandlung von Seewasserdestillat, mit einem dem Filterbett nachgeschalteten Behandlungsraum für eine Desinfektionsvorrichtung. Im Behandlungsraum können insbesondere eine Kathode aus rostfreiem Edelstahl und eine Silberanode angeordnet sein, die an ein Elektroteil angeschlossen sind, das Gleichstrom bereitstellt, so dass eine elektrolytische Silberung des durchfließenden Wassers erfolgt. Die Einrichtung des nachgeschalteten Behandlungsraums ist platzaufwändig und verteuert den Aufhärtungsfilter. Zwar kann durch die elektrolytische Silberung das durchfließende Wasser desinfizierend behandelt werden; eine Entkeimung von etwaigen Filterrückständen im Filterbett ist jedoch nicht möglich. Weiterhin wird die Silberanode im Betrieb verbraucht.

### Aufgabe der Erfindung

Es ist die Aufgabe der vorliegenden Erfindung, ein Verfahren vorzustellen, mit der dauerhaft ein Betrieb eines rückspülbaren Wasserfilters unter verbesserten hygienischen Bedingungen auf einfache und kostengünstige Weise möglich ist.

### Kurze Beschreibung der Erfindung

Diese Aufgabe wird gelöst durch ein Verfahren der eingangs genannten Art, das gemäß Anspruch 1 gekennzeichnet ist.

Mit dem in das Gehäuse eingesetzten Siebfiltereinsatz wird durch einen Einlass in die Einlasskammer einfließendes Wasser beim Durchfließen des Siebfiltereinsatzes (meist ein Drahtgeflecht oder eine Lochblech) gefiltert; das gefilterte Wasser kann über die Auslasskammer in einen Auslass abfließen. Auf der der Einlasskammer zugewandten Seite des Siebfiltereinsatzes bildet sich dabei ein Filterkuchen aus zurückgehaltenen, ungelösten Partikeln. Dieser kann im Rückspülbetrieb über die wenigstens eine Absaugvorrichtung, die sich während des Rückspülbetriebs relativ zum Siebfiltereinsatz bewegt, abgespült werden.

Um die Reinigung des Siebfiltereinsatzes zu unterstützen, ist in die Wasserfilter-Anordnung eine Elektrolysefunktion integriert. Mit der Spannungsquelle können der Siebfiltereinsatz und eine weitere Struktur, welche die Absaugvorrichtung ist, mit einer elektrischen Potentialdifferenz (Spannung) beaufschlagt werden, wodurch ein Elektrolysestrom zwischen dem Siebfiltereinsatz als erster Elektrode und der weiteren Struktur als zweiter Elektrode fließt. An den Elektroden bilden sich Elektrolyseprodukte. Durch die elektrolytische Zersetzung von Wasser entstehen insbesondere sauerstoffhaltige Spezies mit keimtötender Wirkung. Im Wasser enthaltene Chlorid-Ionen werden zu desinfizierend wirkenden Spezies wie Chlor oder unterchlorige Säure umgewandelt.

Dadurch, dass als eine der Elektroden der Siebfiltereinsatz gewählt ist, können in unmittelbarer Nähe des Filterkuchens oder sogar am Filterkuchen selbst Elektrolyseprodukte erzeugt werden. Desinfizierende Elektrolyseprodukte können dann direkt am Filterkuchen (oder dessen Resten) wirken. Gasförmige Elektrolyseprodukte, die am Siebfiltereinsatz entstehen, helfen auch mechanisch, den Filterkuchen (oder dessen Reste) vom Siebfiltereinsatz abzulösen oder abzusprengen.

Die erste und zweite Elektrode stehen nur über das im Gehäuse geführte Wasser (und über die Spannungsquelle) miteinander in elektrischem Kontakt, berühren sich also insbesondere nicht direkt.

Man beachte, dass die für die Zersetzung von Wasser bzw. die Bildung von Chlor nötige Potentialdifferenz in der Praxis aufgrund kinetischer Hemmung um eine so genannte Überspannung über der sich aus der elektrochemischen Spannungsreihe ergebenden Zersetzungsspannung (Wasserzersetzung ca. 1,23 V, Chlorbildung ca. 1,36 V) liegt; die Höhe der Überspannung hängt insbesondere von der jeweiligen Ausführung der Elektroden, und besonders vom Elektrodenmaterial ab. In der Regel reicht aber eine Potentialdifferenz von ca. 2 V aus, um Wasser elektrolytisch zu zersetzen und Chlorid-Ionen zu entladen. Gemäß der Erfindung kann daher die Potentialdifferenz alternativ auch einfach zu 2 V oder mehr gewählt werden.

Der Siebfiltereinsatz und die weitere Struktur sind aus elektrisch leitendem Material (etwa Edelstahl) oder mit einer elektrisch leitenden Beschichtung gefertigt.

### Bevorzugte Ausführungsformen der Erfindung

Die weitere, in Kontakt mit dem Wasser im Gehäuse stehende Struktur ist die Absaugvorrichtung oder ein Teil der Absaugvorrichtung. Die Absaugvorrichtung liegt bei einer bevorzugten Ausführungsform dem Siebfiltereinsatz in geringer Entfernung (in der Regel 2 mm oder weniger, oft 1 mm oder weniger) gegenüber, wodurch eine besonders hohe elektrische Feldstärke bzw. ein besonders hoher Elektrolysestrom erreicht werden kann, wodurch die Desinfektions- und Reinigungsfunktion verbessert wird.

Bevorzugt ist eine Ausführungsform, bei der die Spannungsquelle umfasst
- eine wieder aufladbare oder nicht wieder aufladbare Batterie, oder
- einen elektrischen Generator, der vom Wasserfluss durch den Wasserfilter angetrieben wird, oder
- ein Netzteil und/oder eine Einspeisungsstelle, die an ein externes Stromnetz anschließbar sind.

Mit der Batterie kann auf einfache und kostengünstige Weise eine Spannungsquelle auch an abgelegenen Orten (ohne externem Stromnetz) zur Verfügung gestellt werden. Der elektrischer Generator kann ebenfalls an abgelegenen Orten (ohne externem Stromnetz) als Spannungsquelle dienen und erschöpft sich nicht. Ein Anschluss an ein externes Stromnetz (bevorzugt über ein Netzteil an das öffentliche Stromnetz, in der Regel mit 100-120 V oder 220-240 V Wechselspannung bei 50-60 Hz) stellt ebenfalls eine sich nicht erschöpfende Spannungsquelle zur Verfügung. Typischerweise wird eine Spannungsquelle mit einer Gleichspannung, typischerweise im Bereich 2 V bis 5 V, verwendet.

Besonders vorteilhaft ist eine Ausführungsform, bei der die Spannungsquelle mit der ersten Elektrode als Anode, und mit der zweiten Elektrode als Kathode gepolt ist. An der Anode entsteht bei der Spaltung von Wasser Sauerstoff, der am Siebfiltereinsatz bzw. am dortigen Filterkuchen unmittelbar keimtötend wirken kann. Ebenso wird an der Anode Chlorid zu Chlor oxidiert, das desinfizierend wirkt, und ebenfalls direkt am Siebfiltereinsatz bzw. am dortigen Filterkuchen wirken kann. Auch wird an der Anode Säure gebildet, die Kalkablagerungen am Siebfiltereinsatz auflöst.

Bevorzugt ist auch eine Ausführungsform, bei der die Wasserfilter-Anordnung weiterhin eine Schalteinrichtung aufweist, mit der die Potentialdifferenz zwischen den Elektroden aufschaltbar und abschaltbar ist. Durch die Schalteinrichtung kann die Elektrolysefunktion gezielt eingesetzt werden, wenn sie besonders benötigt wird (etwa nach langer Wasserstagnation) oder wenn die Gelegenheit zur Anwendung gerade günstig ist (etwa während einer Rückspülung). Man beachte, dass im Normalbetrieb die Elektrolysefunktion die meiste Zeit (d.h. zu mehr 99% der Zeit) abgeschaltet ist. Die Schalteinrichtung kann manuell betätigbar oder auch automatisiert ausgebildet sein.

In einer bevorzugten Weiterbildung dieser Ausführungsform umfasst die Schalteinrichtung eine elektronische Steuereinrichtung. Mit der Steuereinrichtung kann das Aufschalten (Einschalten) und Abschalten der Elektrolysefunktion programmiert werden, wodurch die Elektrolysefunktion noch zielgerichteter eingesetzt werden kann. Die elektronische Steuereinrichtung kann insbesondere Situationen, in denen die Elektrolysefunktion besonders benötigt wird, oder in denen die Gelegenheit zur Anwendung gerade günstig ist, durch geeignete Programmierung (und Informationen) selbstständig erkennen. Gemäß einer vorteilhaften Weiterbildung weist die Wasserfilter-Anordnung weiterhin Mittel auf, die dazu ausgebildet sind, die Durchführung einer Rückspülung festzustellen und an die Schalteinrichtung zu signalisieren. Die Schalteinrichtung kann dann mithilfe der Mittel eine Elektrolysebehandlung gezielt schalten, während eine Rückspülung stattfindet.

Bevorzugt umfassen dabei die Mittel
- einen Wasserzähler, der in oder hinter der Absaugvorrichtung angeordnet ist, insbesondere in einem Spülwasserauslass, oder
- einen Stellungssensor eines Spülventils, oder
- einen Stellungssensor einer Drehmechanik, mit der der Siebfiltereinsatz relativ zur Absaugvorrichtung verdrehbar ist. Diese Mittel sind in der Praxis besonders bewährt. Bei der Drehmechanik kann der Siebfiltereinsatz oder alternativ die Absaugvorrichtung ortsfest ausgebildet sein; das jeweils andere Teil wird dann gedreht. Falls eine elektronische Steuereinrichtung vorgesehen ist, die selbsttägig eine Rückspülng auslöst und durchführt, sind die Durchführung einer Rückspülung der Steuereinrichtung ohnehin bekannt, so dass diese nicht zusätzlich von außen an diese signalisiert zu werden braucht.

Mit dem erfindungsgemäßen Verfahren kann die Abtötung von Mikroorganismen in einem Filterkuchen am Siebfiltereinsatz erfolgen, und die Ablösung des Filterkuchens vom Siebfiltereinsatz, insbesondere während einer Rückspülung, unterstützt werden. Desinfizierend wirkende Elektrolyseprodukte entstehen direkt an den Elektroden und können daher dort unmittelbar wirken, insbesondere am Filterkuchen an der ersten Elektrode (Siebfiltereinsatz).

Eine bevorzugte Variante des erfindungsgemäßen Verfahrens sieht vor, dass die erste Elektrode als Anode, und die zweite Elektrode als Kathode geschaltet wird. Spezies mit keimtötender Wirkung (wie Radikale von Sauerstoff und Chlor, und daraus abgeleitete Verbindungen) entstehen hauptsächlich an der Anode. Zudem wird die Umgebung der Anode sauer, wodurch Kalkablagerungen am Siebfiltereinsatz gut aufgelöst werden können, und somit die Durchgänge des Siebfiltereinsatzes frei gehalten werden können. Die Potentialdifferenz wird während einer Rückspülung des Wasserfilters angelegt. Überschüssige, elektrolytisch erzeugte Desinfektionsmittel und zugehörige Abbauprodukte können gleich ausgespült werden, und gelangen nicht in die nachgelagerte Wasserinstallation. Ebenso können abgesprengte Filterkuchenreste gleich ausgespült werden. Im einfachsten Fall wird ausschließlich während einer Rückspülung die Potentialdifferenz angelegt. In diesem Fall kann die Potentialdifferenz durch den Beginn des Rückspülbetriebs aufgeschaltet und durch das Ende des Rückspülbetriebs abgeschaltet werden. Beispielsweise kann durch eine Relativbewegung von Siebfiltereinsatz und Absaugvorrichtung automatisch ein geschlossener Kontakt zwischen den Elektroden und der Spannungsquelle eingerichtet und wieder aufgehoben werden, etwa über einen Schleifkontakt. Ebenso kann durch Öffnen und Schließen des Spülventils ein Signal an eine elektronische Steuereinrichtung übertragen werden, die dann die Potentialdifferenz entsprechend aufschaltet und abschaltet. Es ist aber auch möglich, außerhalb von Rückspülungen zusätzliche Elektrolysezeiten vorzusehen. Weiterhin ist es möglich, die Potentialdifferenz während der vollständigen Dauer einer Rückspülung oder auch nur während eines Teils der Dauer einer Rückspülung anzulegen.

Bei einer vorteilhaften Weiterentwicklung dieser Variante bleibt nach dem Ende einer Rückspülung die Potentialdifferenz noch für eine Zeitdauer aufrechterhalten. Dadurch kann insbesondere bei hartnäckigen Verschmutzungen eine Verstärkung der keimtötenden und reinigenden Wirkung im Rahmen einer elektrolytischen Nachbehandlung erreicht werden. Man beachte, dass am Ende der Nachbehandlung vorteilhafter Weise sogleich eine zweite Rückspülung stattfinden kann, um gelockerte Filterkuchenreste und Reste von gebildeten Desinfektionsmitteln nunmehr auszuspülen. An die zweite Rückspülung wird typischerweise keine elektrolytische Nachbehandlung mehr angeschlossen, sondern eine Phase des Normalbetriebs der Wasserfilter-Anordnung.

Vorteilhafter Weise wird dabei die Zeitdauer gewählt in Abhängigkeit von
- der zwischen den beiden letzten Rückspülungen durch den Wasserfilter geflossenen Wassermenge, und/oder
- der zwischen den beiden letzten Rückspülungen vergangenen Zeit, und/oder
- dem Druckverlust beim Durchfluss des Wasserfilters vor der letzten Rückspülung, und/oder
- der Dauer von Stagnationsphasen zwischen den beiden letzten Rückspülungen. Die Die Dauer der Nachbehandlung wird hier dem Risiko einer Aufkeimung angepasst. Lange Stagnationsphasen und starke Schmutzablagerungen wirken sich ungünstig aus, d.h. vergrößern den Filterkuchen und machen eine Verkeimung wahrscheinlicher. Hier wird entsprechend länger nachbehandelt. Ein zunehmender Verschmutzungsgrad des Wasserfilters macht sich durch einen steigenden Druckverlust beim Durchströmen des Filters bemerkbar.

Bevorzugt ist auch eine Verfahrensvariante, bei der die Potentialdifferenz zwischen zwei Rückspülungen zeitweise angelegt wird. Besonders bei manuellen Rückspülfiltern kann es vorkommen, dass der Betreiber eine regelmäßige Rückspülung vergisst. Wird der Wasserfilter längere Zeit nicht durch eine Rückspülung gereinigt, so kann es unter Umständen zu einem Wachstum von Mikroorganismen am Filterkuchen kommen. Eine zeitlich begrenzte Elektrolyse zwischen zwei Rückspülungen, die auch in bestimmten Abständen wiederholt werden kann, reduziert die Gefahr einer Aufkeimung.

Ebenfalls bevorzugt ist eine Variante, bei der die Potentialdifferenz während Phasen, in denen kein Wasser durch den Wasserfilter fließt, zeitweise angelegt wird. Die Elektrolyseprodukte bzw. Spezies mit keimtötender Wirkung können in Stagnationsphasen länger einwirken. Zusätzlich können gasförmige Desinfizienzien, die an der Siebfilteroberfläche entstehen, das Ablösen von dort fest anhaftenden Schmutzpartikeln unterstützen, so dass diese später leichter ausgespült werden können. Um eine zu hohe Konzentration an Desinfizienzien zu vermeiden, wird die Potentialdifferenz nur für einen begrenzten Zeitraum in Stagnationsphasen angelegt, beispielsweise für einige Sekunden bis wenige Minuten.

Die Potentialdifferenz wird zumindest zeitweise während Rückspülungen des Wasserfilters angelegt und ist während mehr als 99% der Zeiten eines Normalbetriebs des Wasserfilters abgeschaltet, wobei der Normalbetrieb zwischen den Rückspülungen stattfindet. Während der Rückspülungen können durch die Elektrolysewirkung abgelöste Verschmutzungen und entstandene Gase unmittelbar ausgespült werden. Umgekehrt erfolgt während des Normalbetriebs, in denen der Wasserfilter gefiltertes Wasser für Anwendungen zur Verfügung stellt (und nicht rückgespült wird), keine oder nur eine minimale Ablösung von Verschmutzungen vom Siebfiltereinsatz und keine oder nur eine minimale Gasentwicklung, so dass das gefilterte Wasser unbelastet bleibt. In die nachfolgende Wasserinstallation wird insbesondere kein Knallgas eingespült. Typischerweise erfolgt im zeitlichen Mittel während wenigstens 50%, bevorzugt während wenigstens 75%, der Zeiten von Rückspülungen eine Elektrolysebehandlung.

Vorteilhaft ist auch eine Variante, bei der im Normalbetrieb die Potentialdifferenz im zeitlichen Mittel während mehr als 95%, bevorzugt mehr als 99%, der Zeiten von Wasserentnahmen von gefiltertem Wasser abgeschaltet ist, insbesondere wobei während der Zeiten von Wasserentnahmen von gefiltertem Wasser die Potentialdifferenz gar nicht angelegt wird. Dadurch wird eine unerwünschte physikalische oder chemische Veränderung (etwa Redoxreaktionen von gelösten Stoffen oder Ausfällungen) des entnommenen, gefilterten Wassers durch eine Elektrolysewirkung verhindert oder zumindest minimiert. In dieser Variante erfolgt das Aufschalten der Potentialdifferenz in der Regel vor allem während Rückspülphasen. Bevorzugt ist auch eine Variante, bei der im Normalbetrieb eine Elektrolysebehandlungsphase geschaltet wird, wenn für eine gewisse Zeit seit der letzten Rückspülphase oder letzten Elektrolysebehandlungsphase keine Rückspülphase gestartet wurde, insbesondere wobei die gewisse Zeit wenigstens 48 Stunden beträgt. Durch die desinfizierende Wirkung der bei einer Elektrolysebehandlung entstehenden Stoffe, insbesondere Chlor- und Sauerstoffverbindungen, kann einer Verkeimung des Siebfiltereinsatzes vorgebeugt werden, ohne dass es einer vollständigen Rückspülung bedürfte. Dies ist insbesondere vorteilhaft, wenn aufgrund von geringen Wasserentnahmen der Siebfiltereinsatz nur geringfügig verschmutzt ist. Durch einen zeitlichen Abstand von Elektrolysebehandlungen (mit aufgeschalteter Potentialdifferenz) von wenigstens 48 Stunden im Normalbetrieb werden unnötige Gasentwicklungen in der Wasserinstallation (und andere unerwünschte Reaktionen) vermieden. Typischerweise beträgt die gewisse Zeit weiterhin maximal 14 Tage, bevorzugt maximal 7 Tage. In der Regel erfolgt auch in dieser Variante während Rückspülungen eine Aufschalten der Potentialdifferenz.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig.1 1: eine schematische Ansicht einer Wasserfilter-Anordnung, mit dessen Wasserfilter im Querschnitt;
- Fig. 2a: eine erste Variante eines erfindungsgemäßen Verfahrens zum Betrieb einer Wasserfilter-Anordnung, mit Elektrolysebehandlungsphasen, die Rückspülphasen entsprechen;
- Fig. 2b: eine zweite Variante eines erfindungsgemäßen Verfahrens zum Betrieb einer Wasserfilter-Anordnung, mit Elektrolysebehandlungsphasen, die gegenüber den Rückspülphasen verlängert sind und zusätzlichen Elektrolysebehandlungsphasen;
- Fig. 2c: eine dritte Variante eines erfindungsgemäßen Verfahrens zum Betrieb einer Wasserfilter-Anordnung, mit Elektrolysebehandlungsphasen, die während Stagnationszeiten stattfinden;
- Fig. 2d: eine vierte Variante eines erfindungsgemäßen Verfahrens zum Betrieb einer Wasserfilter-Anordnung, mit Elektrolysebehandlungsphasen, die in Abhängigkeit von der Zeit seit der vorhergehenden Elektrolysebehandlungsphase gegenüber den Rückspülphasen verlängert sind.

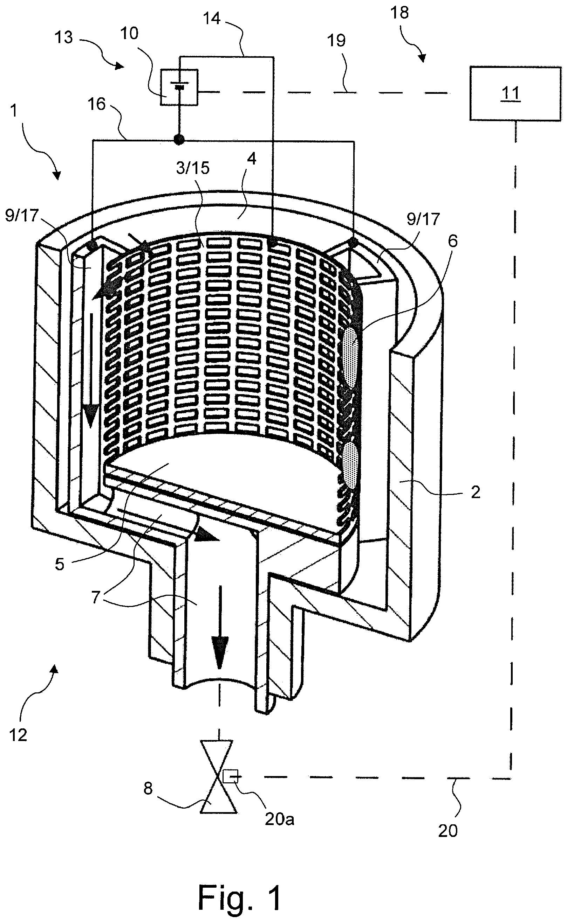

Die **Figur 1** zeigt schematisch eine erfindungsgemäße Wasserfilter-Anordnung 12, umfassend einen Wasserfilter 1 und eine integrierte Elektrolysevorrichtung 13.

Der Wasserfilter 1 umfasst ein Gehäuse 2, in welchem ein Siebfiltereinsatz 3 angeordnet ist. Der Siebfiltereinsatz 3 ist hier als ein Edelstahlblech mit definierten Durchlässen, typischerweise mit einer Größe von ca. 80-150 µm (insbesondere gemäß DIN EN 13443-1), ausgebildet. Der Siebfiltereinsatz 3 unterteilt das Innere des Gehäuses 2 in eine radial außen liegende, ringförmige Einlasskammer 4 und eine radial innen liegende Auslasskammer 5. Das Innere des Gehäuses 2, also die Einlasskammer 4 und die Auslasskammer 5, sind im Betrieb ständig mit Wasser gefüllt. Die Einlasskammer 4 ist in nicht näher dargestellte Weise mit einem Zulauf für ungefiltertes Wasser (beispielsweise aus dem öffentlichen Trinkwassernetz) verbunden, während die Auslasskammer in nicht näher dargestellter Weise mit einem Ablauf für gefiltertes Wasser (etwa zu einer Hausinstallation) verbunden ist.

In die Einlasskammer 4 zuströmendes Wasser durchtritt im Normalbetrieb den Siebfiltereinsatz 3, wobei ungelöste Partikel wie Sandkörner oder Rostteilchen am Siebfiltereinsatz 3 außen zurückgehalten werden, und gelangt dann gefiltert in die Auslasskammer 5. Von der Auslasskammer 5 fließt das gefilterte Wasser über den Ablauf ab. Am Siebfiltereinsatz 3 bildet sich dabei allmählich außen ein Filterkuchen, vgl. die beispielshaft eingezeichneten Filterkuchen-Teilstücke 6, der im Laufe der Zeit unter ungünstigen Bedingungen verkeimen kann. Im Normalbetrieb ist ein Spülventil 8, welches einen Spülwasserkanal 7 versperrt, verschlossen.

Im Rückspülbetrieb (vgl. die Flusspfeile in der Fig. 1) wird das Spülventil 8 geöffnet. Wasser tritt vom Zufluss in die Einlasskammer 4 ein, durchtritt den größten (nicht von Absaugvorrichtungen 9 abgedeckten) Teil des Siebfiltereinsatzes 3 und dringt in die Ablaufkammer 5 ein. Zumindest ein Teil des Wassers aus der Auslasskammer 5 kann zurück durch jeweils einen lokalen Abschnitt des Siebfiltereinsatzes 3 unter einer Absaugvorrichtung 9 in eine Absaugvorrichtung 9 fließen, und von dort durch den Spülwasserkanal (Spülwasserauslass) 7 abfließen. Dabei kann das von innen nach außen durch den Siebfiltereinsatz 3 strömende Wasser am lokalen Abschnitt des Siebfiltereinsatzes 3 den Filterkuchen mitreißen und so den Siebfiltereinsatz 3 reinigen. Während des Rückspülbetriebs wird der Siebfiltereinsatz 3 relativ zu den (hier mehreren) Absaugvorrichtungen 9 mit einer nicht näher dargestellten Drehmechanik gedreht, so dass während der Dauer einer Rückspülphase der gesamte Umfang bzw. die gesamte Fläche des Siebfiltereinsatz 3 wenigstens einmal von einer Absaugvorrichtung 9 überstrichen wird. Man beachte, dass die Absaugvorrichtungen 9 mit ihren radial innen liegenden Vorderkanten geringfügig vom Siebfiltereinsatz 3 beabstandet sind, so dass auch ein geringfügiger Querstrom direkt aus der Einlasskammer 4 in die Absaugvorrichtungen 9 stattfindet.

Unter ungünstigen Bedingungen, etwa bei geringem Wasserdruck im Zulauf, kann die Abreinigung des Siebfiltereinsatzes 3 durch Rückspülung allein unvollständig sein. Insbesondere können lokal Filterkuchenreste am Siebfiltereinsatz 3 zurückbleiben. Ebenso kann eine Rückspülung bei manueller Durchführung vergessen werden. Um die Reinigung des Siebfiltereinsatzes 3 zu unterstützen, verfügt die Wasserfilter-Anordnung 12 über die integrierte Elektrolysevorrichtung 13, mit der eine Elektrolysebehandlung des Siebfiltereinsatzes 3 erfolgen kann.

Die Elektrolysevorrichtung 13 verfügt über eine Spannungsquelle 10, die hier eine Gleichspannung von 5 V bereitstellt. Typischerweise umfasst die Spannungsquelle 10 ein Netzteil, das an das öffentliche Stromnetz angeschlossen ist. Die Spannungsquelle 10 ist über eine erste elektrische Verbindung 14 mit dem Siebfiltereinsatz 3 als eine erste Elektrode 15, und über eine zweite elektrische Verbindung 16 hier mit den Absaugvorrichtungen 9, die in ihrer Gesamtheit als zweite Elektrode 17 fungieren, verbunden. Der Siebfiltereinsatz 3 ist dabei anodisch geschaltet, und die Absaugvorrichtungen 9 sind kathodisch geschaltet.

Weiterhin ist eine Schalteinrichtung 18 vorgesehen, mit der die Spannungsquelle 10 aufgeschaltet und abgeschaltet werden kann. Eine Steuerleitung 19 überträgt Steuersignale von einer elektronischen Steuereinheit 11 zur Spannungsquelle 10, in die beispielsweise ein Relais (nicht näher dargestellt) integriert ist, mit dem Kontakte an der Spannungsquelle 10 unterbrochen oder geschlossen werden können. Die elektronische Steuereinrichtung 11 verfügt über eine Programmierung, anhand derer die Steuereinrichtung 11 automatisch einen Elektrolysebetrieb (bzw. eine Elektrolysebehandlungsphase) beginnen und beenden kann.

In der gezeigten Ausführungsform ist weiterhin eine Signalleitung 20 zu einem Stellungssensor 20a eingerichtet, die die Ventilstellung des Spülventils 8 an die elektronische Steuereinrichtung 11 meldet. Dadurch kann die elektronische Steuereinrichtung 11 den Elektrolysebetrieb an durchgeführten Rückspülungen (Rückspülphasen) ausrichten, und insbesondere den Elektrolysebetrieb mit den Rückspülungen synchronisieren.

Während durch die Spannungsquelle 10 eine Potentialdifferenz zwischen dem Siebfiltereinsatz 3 und den Absaugvorrichtungen 9 anliegt, fließt durch das im Gehäuse 2 vorhandene Wasser ein Elektrolysestrom zwischen den Elektroden 15, 17. Die Spannung von 5 V reicht ohne Weiteres dazu aus, das Wasser elektrolytisch zu spalten, bzw. um O₂-Gas und/oder andere sauerstoffhaltige Spezies an der Anode bzw. ersten Elektrode 15 zu erzeugen, und weiterhin Chlorid-Ionen im Wasser zu entladen und Cl₂-Gas und/oder andere chlorhaltige Spezies an der Anode zu erzeugen. Diese Elektrolyseprodukte wirken desinfizierend, und können so Keime im Filterkuchen oder in Filterkuchenresten am Siebfiltereinsatz 3, der die erste Elektrode darstellt, abtöten. Zudem können durch das entstehende Gas Filterkuchenreste leichter vom Siebfiltereinsatz 3 gelöst oder abgesprengt werden.

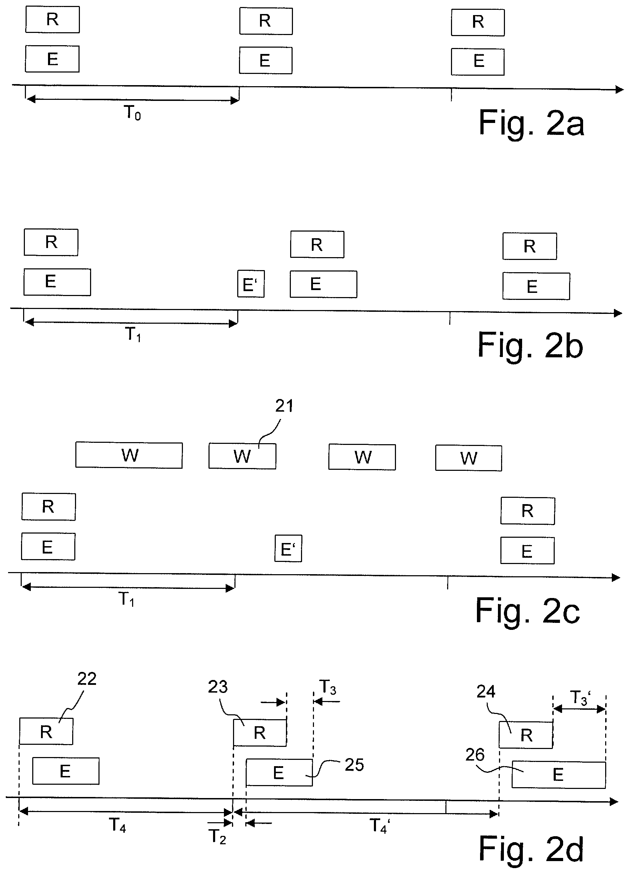

Die Figuren 2a-2d zeigen schematisch den zeitlichen Ablauf des Betriebs einer erfindungsgemäßen Wasserfilter-Anordnung, etwa der Wasserfilter-Anordnung 12 von Fig. 1. Nach rechts aufgetragen ist jeweils die Zeit t; mit R sind Rückspülphasen markiert, mit E sind Elektrolysebehandlungsphasen (in denen zwischen den Elektroden ein Elektrolysestrom fließt) markiert, und mit W sind Wasserentnahmephasen markiert. Man beachte, dass die Dauer von Phasen E, R, W zur besseren Veranschaulichung übertrieben im Vergleich zu den Abständen zwischen den Phasen E, R, W dargestellt ist.

In der in **Fig. 2a** gezeigten Variante werden alle Elektrolysebehandlungsphasen E zeitgleich mit Rückspülphasen (Rückspülungen) R des Wasserfilters begonnen. Weiterhin ist die Dauer der Elektrolysebehandlungsphasen E gleich lang wie die der Rückspülphasen R, d.h. die Phasen E, R werden auch zeitgleich beendet. Dies ist sehr einfach zu schalten (insbesondere auch ohne eine programmierbare Steuerreinrichtung, falls gewünscht). Diese Variante wird vor allem dann eingesetzt, wenn die Kosten gering gehalten werden sollen, oder auch wenn regelmäßige Rückspülungen (etwa jeweils nach Ablauf einer bestimmten Zeit T₀, etwa einem Monat) durch eine Automatik gewährleistet sind, und sich der Filterkuchen jedenfalls mit elektrolytischer Unterstützung gut ablösen lässt.

In **Fig. 2b** ist eine Variante gezeigt, bei der zeitgleich mit jeder Rückspülphase R auch eine Elektrolysebehandlungsphase E begonnen wird. Die Elektrolysebehandlungsphasen E dauern jedoch länger als die Rückspülphasen R. Dadurch wird eine zusätzliche Desinfektion von etwaigen nach einer Rückspülphase R am Siebfiltereinsatz verbliebenen Filterkuchenresten und auch des Siebfiltereinsatzes selbst erreicht. Zusätzlich wird hier eine Elektrolysebehandlungsphase E' ohne eine zeitgleich beginnende Rückspülung R geschaltet, wenn nach Ablauf einer gewissen Zeit T₁ seit der letzten Rückspülungsphase R (oder alternativ seit der letzten Elektrolysebehandlungsphase E, E') keine Rückspülphase R gestartet wurde. Diese Variante ist gut geeignet, wenn Rückspülungen relativ unregelmäßig manuell ausgelöst, insbesondere vollständig manuell durchgeführt werden (etwa durch händischen Drehen einer Drehmechanik, ohne einen Motor). Man beachte, dass die zusätzliche Elektrolysebehandlungsphase E' hier eine andere, nämlich kürzere Dauer hat als die durch Rückspülphasen R ausgelösten Elektrolysebehandlungsphasen E.

Eine typische Dauer für eine Regenerationsphase R beträgt zwischen 10 Sekunden und 200 Sekunden. Eine typische Dauer für eine Elektrolysebehandlungsphase E liegt bei 30 Sekunden bis 300 Sekunden. Eine typische Dauer eine Elektrolysebehandlungsphase E' liegt bei 15 Sekunden bis 150 Sekunden. Die Zeitdauer T₁ beträgt typischerweise zwischen 2 Tagen und 14 Tagen. Ein typischer zeitlicher Abstand zwischen zwei Rückspülungen R beträgt 14 Tage bis 3 Monate. Somit findet nur während eines sehr geringen zeitlichen Anteils des Normalbetriebs (der jeweils zwischen aufeinanderfolgenden Rückspülungen R stattfindet) eine Elektrolysebehandlung E, E' statt, in der Regel im zeitlichen Mittel während deutlich weniger als 1% des Normalbetriebs. Bei einem zeitlichen Abstand von zwei aufeinanderfolgenden Rückspülungen R von 30 Tagen und einer Zeitdauer T₁ von 3 Tagen ergeben sich beispielsweise ca. 10 Elektrolysebehandlungen E'. Bei einer Zeitdauer von E' von jeweils 2 Minuten ergeben sich insgesamt 20 Minuten Elektrolysedauer in 30 Tagen eines Normalbetriebs, entsprechend einem Anteil von 20 min /43200 min, also von 0,046%. Wenn man noch ca. 1 Minute Elektrolysezeit aus einer über einer Rückspülung R nachlaufenden Elektrolysebehandlung E hinzunimmt, ergeben sich ca. 0,049%.

In der Variante von **Fig. 2c** ist wiederum vorgesehen, zeitgleich mit jeder Rückspülphase R auch eine Elektrolysebehandlungsphase E zu beginnen. Ebenso ist wiederum eine zusätzliche Elektrolysebehandlungsphase E' vorgesehen, wenn nach Ablauf der Zeit T₁ seit der letzten Rückspülphase R (oder Elektrolysebehandlungsphase E, E') keine neue Rückspülphase R gestartet wurde. Allerdings verbietet hier die Programmierung der Steuereinrichtung den Beginn der Elektrolysebehandlungsphase E', solange noch eine Wasserentnahme erfolgt, vgl. die Wasserentnahmephasen W. Der Beginn der Elektrolysebehandlungsphase E' wird daher aufgeschoben, bis die am Ende der Zeit T₁ noch laufende Wasserentnahmephase W, hier markiert mit Bezugszeichen 21, beendet ist. Typischerweise wird auch eine Rückspülphase R nur gestartet, wenn gerade keine Wasserentnahme erfolgt. Dadurch wird sichergestellt, dass der Wasserdruck nach dem Wasserfilter nicht unnötig durch den Rückspülbetrieb reduziert wird, und umgekehrt der Rückspülbetrieb nicht durch zu geringen Wasserdruck im Rückfluss beeinträchtigt wird.

In dieser Variante erfolgt also im Normalbetrieb während Wasserentnahmen W keine Elektrolysebehandlung. Im Allgemeinen ist es bevorzugt, wenn im Normalbetrieb im zeitlichen Mittel allenfalls während eines sehr kleinen Anteils der Zeiten von Wasserentnahmen W, bevorzugt während weniger als 5% der Zeiten von Wasserentnahmen W, eine Elektrolysebehandlung erfolgt. Wenn beispielsweise innerhalb von 30 Tagen zwischen zwei Rückspülungen R, verteilt über eine Vielzahl von Einzelentnahmen, insgesamt während 5 Stunden (also 300 Minuten) Wasserentnahmen W erfolgen, so entfällt bevorzugt weniger als 300 min * 0,05 = 6 Minuten auf Elektrolysebehandlungen während dieser Wasserentnahmen W.

In der Variante von **Fig. 2d** ist es vorgesehen, erst nach Verstreichen einer Zeit T₂ nach Beginn einer Rückspülphase R mit einer Elektrolysebehandlungsphase E zu beginnen. Typischerweise überstreicht in dieser Variante die Absaugvorrichtung den Siebfiltereinsatz mehrfach, und die Zeit T₂ ist so gewählt, dass der Siebfiltereinsatz zu Beginn einer Elektrolysebehandlungsphase E bereits wenigstens einmal vollständig überstrichen wurde, so dass ein Großteil des Filterkuchens bereits abgelöst wurde, und die Elektrolysebehandlung sich auf die hartnäckigen, verbliebenen Verschmutzungen konzentrieren kann. Weiterhin ist in dieser Variante vorgesehen, dass die Elektrolysebehandlungsphasen E erst nach dem Ende der zugehörigen Rückspülphase R beendet werden. Dabei ist die zusätzliche Zeitdauer T₃, T₃', die nach dem Ende der zugehörigen Rückspülphase R bis zum Ende der Elektrolysebehandlungsphase E vergeht, abhängig von der Zeit T₄, T₄' seit der vorhergehenden Rückspülphase R. Zwischen den Rückspülphasen 22 und 23 (bzw. deren Startzeitpunkten) ist eine kürzere Zeit T₄ vergangen als zwischen den Rückspülphasen 23 und 24 (bzw. deren Startzeitpunkten), vgl. die längere Zeit T₄'. Die zusätzliche Zeitdauer T₃ der Elektrolysebehandlungsphase 25 ist in dieser Situation kürzer als die zusätzliche Zeitdauer T₃' der Elektrolysebehandlungsphase 26, da in kürzerer Zeit T₄ auch nur ein geringeres Verkeimungsrisiko vorliegt, und entsprechend weniger Desinfektionswirkung benötigt wird, die in der kürzeren Zeitdauer T₃ bereit gestellt werden kann. Diese Variante nutzt den Elektrolysestrom besonders effizient. Die Variante ist wiederum gut geeignet, wenn Rückspülungen relativ unregelmäßig manuell ausgelöst werden.

Die Zeit T₂ entspricht in der in Fig. 2d gezeigten Variante 25% der Dauer einer Rückspülphase R, so dass hier während 75% der Zeiten von Rückspülphasen R eine Elektrolysebehandlung erfolgt.

## Patentansprüche

1. Verfahren zum Betrieb eines rückspülbaren Wasserfilters (1),
wobei der Wasserfilter (1) einen Siebfiltereinsatz (3) in einem wasserführenden Gehäuse (2) aufweist, wobei der Siebfiltereinsatz (3) das Gehäuse (2) in eine Einlasskammer (4) und eine Auslasskammer (5) unterteilt, und wobei der Wasserfilter (1) wenigstens eine Absaugvorrichtung (9) in der Einlasskammer (4) aufweist,
**dadurch gekennzeichnet,**
**dass** eine Potentialdifferenz zwischen dem Siebfiltereinsatz (3) als einer ersten Elektrode (15) und einer weiteren, in Kontakt mit dem Wasser im Gehäuse (2) stehenden Struktur des Wasserfilters (1) als einer zweiten. Elektrode (17) angelegt wird, wobei die Potentialdifferenz zwischen der ersten Elektrode (15) und der zweiten Elektrode (17) ausreichend groß für eine Elektrolyse von Wasser und/oder für eine Oxidation von Chlorid-Ionen zu Chlor gewählt ist,
**dass** die weitere, in Kontakt mit dem Wasser im Gehäuse (2) stehende Struktur die Absaugvorrichtung (9) oder ein Teil der Absaugvorrichtung (9) ist,
**dass** die erste und zweite Elektrode (15, 17) nur über das im Gehäuse (2) geführte Wasser und über die Spannungsquelle (10) miteinander in elektrischem Kontakt stehen,
**dass** die Potentialdifferenz zumindest zeitweise während Rückspülungen (R) des Wasserfilters (1) angelegt wird, wobei während der Rückspülungen (R) sich die Absaugvorrichtung (9) relativ zum Siebfiltereinsatz (3) bewegt,
und **dass** die Potentialdifferenz während mehr als 99% der Zeiten eines Normalbetriebs des Wasserfilters (1) abgeschaltet ist, wobei der Normalbetrieb zwischen den Rückspülungen (R) stattfindet.

2. Verfahren nach Anspruch 1, **dadurch gekennzeichnet, dass** die Absaugvorrichtung (9) dem Siebfiltereinsatz (3) in geringer Entfernung von 2 mm oder weniger gegenüber liegt.

3. Verfahren nach einem der vorhergehenden Ansprüche, **dadurch gekennzeichnet, dass** die Spannungsquelle (10) mit der ersten Elektrode (15) als Anode, und mit der zweiten Elektrode (17) als Kathode gepolt ist.

4. Verfahren nach einem der vorhergehenden Ansprüche, **dadurch gekennzeichnet, dass** die Wasserfilter-Anordnung (12) weiterhin eine Schalteinrichtung (18) aufweist, mit der die Potentialdifferenz zwischen den Elektroden (15, 17) aufschaltbar und abschaltbar ist, insbesondere wobei die Schalteinrichtung (18) eine elektronische Steuereinrichtung (11) umfasst.

5. Verfahren nach Anspruch 4, **dadurch gekennzeichnet, dass** die Wasserfilter-Anordnung (12) weiterhin Mittel aufweist, die dazu ausgebildet sind, die Durchführung einer Rückspülung (R) festzustellen und an die Schalteinrichtung (18) zu signalisieren.

6. Verfahren nach einem der vorhergehenden Ansprüche, **dadurch gekennzeichnet, dass** im zeitlichen Mittel während wenigstens 50% der Zeiten von Rückspülungen (R) eine Elektrolysebehandlung erfolgt.

7. Verfahren nach einem der vorhergehenden Ansprüche, **dadurch gekennzeichnet, dass** während der Rückspülungen (R) der Siebfiltereinsatz (3) relativ zur Absaugvorrichtung (9) gedreht wird.

8. Verfahren nach einem der vorhergehenden Ansprüche, **dadurch gekennzeichnet, dass** nach dem Ende einer Rückspülung (R) die Potentialdifferenz noch für eine Zeitdauer (T₃, T₃') aufrechterhalten bleibt.

9. Verfahren nach Anspruch 8, **dadurch gekennzeichnet, dass** die Zeitdauer (T₃, T₃') gewählt wird in Abhängigkeit von
- der zwischen den beiden letzten Rückspülungen (R) durch den Wasserfilter (1) geflossenen Wassermenge, und/oder
- der zwischen den beiden letzten Rückspülungen (R) vergangenen Zeit (T₄, T₄'), und/oder
- dem Druckverlust beim Durchfluss des Wasserfilters (1) vor der letzten Rückspülung (R), und/oder
- der Dauer von Stagnationsphasen zwischen den beiden letzten Rückspülungen (R).

10. Verfahren nach einem der vorhergehenden Ansprüche, **dadurch gekennzeichnet, dass** die Potentialdifferenz zwischen zwei Rückspülungen (R) zeitweise angelegt wird.

11. Verfahren nach einem der vorhergehenden Ansprüche, **dadurch gekennzeichnet, dass** die Potentialdifferenz während Phasen, in denen kein Wasser durch den Wasserfilter fließt, zeitweise angelegt wird.

12. Verfahren nach einem der vorhergehenden Ansprüche, **dadurch gekennzeichnet, dass** im Normalbetrieb die Potentialdifferenz im zeitlichen Mittel während mehr als 95%, bevorzugt mehr als 99%, der Zeiten von Wasserentnahmen (W) von gefiltertem Wasser abgeschaltet ist,
insbesondere wobei während der Zeiten von Wasserentnahmen (W) von gefiltertem Wasser die Potentialdifferenz gar nicht angelegt wird.

13. Verfahren nach einem der vorhergehenden Ansprüche, **dadurch gekennzeichnet, dass** im Normalbetrieb eine Elektrolysebehandlungsphase (E') geschaltet wird, wenn für eine gewisse Zeit (T₁) seit der letzten Rückspülphase (R) oder letzten Elektrolysebehandlungsphase (E, E') keine Rückspülphase (R) gestartet wurde,
insbesondere wobei die gewisse Zeit (T₁) wenigstens 48 Stunden beträgt.

## Claims

1. Method for operating a backflushable water filter (1), wherein the water filter (1) comprises a filtering screen insert (3) in a water-carrying housing (2), wherein the filtering screen insert (3) divides the housing (2) into an inlet chamber (4) and an outlet chamber (5)
and wherein the water filter (1) comprises at least one suction device (9) in the inlet chamber (4),
**characterized in that**
a potential difference is applied between the filtering screen insert (3) as a first electrode (15) and a further structure of the water filter (1) which is in contact with the water in the housing (2) as a second electrode (17), wherein the potential difference between the first electrode (15) and the second electrode (17) is sufficiently large for electrolysis of water and/or for oxidation of chloride ions to chlorine,
that the further structure which is in contact with the water in the housing (2) is the suction device (9) or part of the suction device (9),
that the first and the second electrode (15, 17) are in electrical contact with one another only via the water carried in the housing (2) and via the voltage source (10),
that the potential difference is applied at least temporarily during backflushing operations (R) of the water filter (1), wherein during the backflushing operations (R) the suction device (9) moves relative to the filtering screen insert (3),
and that the potential difference is switched off during more than 99% of the times of normal operation of the water filter (1), wherein normal operation takes place between the backflushing operations (R).

2. Method according to claim 1, **characterized in that** the suction device (9) is located opposite the filtering screen insert (3) at a short distance therefrom of 2mm or less.

3. Method according to any one of the preceding claims, **characterized in that** the voltage source (10) is poled with the first electrode (15) as anode and with the second electrode (17) as cathode.

4. Method according to any one of the preceding claims, **characterized in that** the water filter arrangement (12) moreover comprises a switching device (18) with which the potential difference between the electrodes (15, 17) can be enabled and disabled, in particular wherein the switching device (18) comprises an electronic control device (11).

5. Method according to claim 4, **characterized in that** the water filter arrangement (12) furthermore comprises means which are designed to determine performance of a backflushing operation (R) and to signal this to the switching device (18).

6. Method according to any one of the preceding claims, **characterized in that** averaged over time, an electrolytic treatment is performed during at least 50% of the times of backflushing operations (R).

7. Method according to any one of the preceding claims, **characterized in that** during the backflushing operations (R) the filtering screen insert (3) is rotated relative to the suction device (9).

8. Method according to any one of the preceding claims, **characterized in that** after termination of a backflushing operation (R) the potential difference is still maintained for a time period (T₃, T₃').

9. Method according to claim 8, **characterized in that** the time period (T₃, T₃') is selected depending on
- the amount of water that has flown through the water filter (1) between the last two backflushing operations (R) and/or
- the time period (T₄, T₄') that has lapsed between the last two backflushing operations (R), and/or
- the pressure loss during passage of the water filter (1) prior to the last backflushing operation (R), and/or
- the duration of stagnation phases between the last two backflushing operations (R).

10. Method according to any one of the preceding claims, **characterized in that** the potential difference is temporarily applied between two backflushing operations (R).

11. Method according to any one of the preceding claims, **characterized in that** the potential difference is temporarily applied during phases in which no water flows through the water filter.

12. Method according to any one of the preceding claims, **characterized in that** during normal operation the potential difference is switched off averaged over time during more than 95%, preferably more than 99%, of the times of water withdrawals (W) of filtered water,
in particular wherein during times of water withdrawals (W) of filtered water the potential difference is not applied at all.

13. Method according to any one of the preceding claims, **characterized in that** during normal operation an electrolytic treatment phase (E') is activated if, for a certain time period (T₁) since the last backflushing phase (R) or the last electrolytic treatment phase (E, E'), no backflushing phase (R) has been started,
in particular wherein the certain time period (T₁) is at least 48 hours.

## Revendications

1. Procédé d'exploitation d'un filtre d'eau (1) à rétrolavage, sachant que le filtre d'eau (1) présente une cartouche de filtre-tamis (3) dans un boîtier (2) conduisant l'eau, sachant que la cartouche de filtre-tamis (3) divise le boîtier (2) en une chambre d'admission (4) et une chambre d'évacuation (5) et sachant que le filtre d'eau (1) présente au moins un dispositif d'aspiration (9) dans la chambre d'admission (4), **caractérisé en ce qu'**on applique une différence de potentiel entre la cartouche de filtre-tamis (3) en tant que première électrode (15) et une autre structure, se trouvant en contact avec l'eau dans le boîtier (2), du filtre d'eau (1) en tant que deuxième électrode (17), sachant que la différence de potentiel entre la première électrode (15) et la deuxième électrode (17) est choisie suffisamment grande pour une électrolyse de l'eau et/ou pour une oxydation d'ions chlorure en chlore,
**en ce que** l'autre structure, se trouvant en contact avec l'eau dans le boîtier (2), est le dispositif d'aspiration (9) ou une partie du dispositif d'aspiration (9),
**en ce que** la première électrode (15) et la deuxième électrode (17) se trouvent en contact électrique mutuel uniquement par l'intermédiaire de l'eau dirigée dans le boîtier (2) et par l'intermédiaire de la source de tension (10),
**en ce que** la différence de potentiel est appliquée au moins temporairement pendant des rétrolavages (R) du filtre d'eau (1), sachant que pendant les rétrolavages (R), le dispositif d'aspiration (9) se déplace par rapport à la cartouche de filtre-tamis (3),
et **en ce que** la différence de potentiel est désactivée pendant plus de 99% des périodes d'une exploitation normale du filtre d'eau (1), sachant que l'exploitation normale a lieu entre les rétrolavages (R).

2. Procédé selon la revendication 1, **caractérisé en ce que** le dispositif d'aspiration (9) fait face à la cartouche de filtre-tamis (3) à une faible distance de 2 mm ou moins.

3. Procédé selon l'une des revendications précédentes, **caractérisé en ce que** la source de tension (10) est polarisée avec la première électrode (15) comme anode et avec la deuxième électrode (17) comme cathode.

4. Procédé selon l'une des revendications précédentes, **caractérisé en ce que** l'ensemble (12) de filtre d'eau présente en outre un dispositif de commutation (18) qui permet d'activer de de désactiver la différence de potentiel entre les électrodes (15, 17), sachant notamment que le dispositif de commutation (18) comprend un dispositif de commande électronique (11).

5. Procédé selon la revendication 4, **caractérisé en ce que** l'ensemble (12) de filtre d'eau comprend en outre des moyens qui sont conçus pour constater l'exécution d'un rétrolavage (R) et le signaler au dispositif de commutation (18).

6. Procédé selon l'une des revendications précédentes, **caractérisé en ce qu'**un traitement par électrolyse a lieu pendant, en moyenne dans le temps, au moins 50% des périodes des rétrolavages (R).

7. Procédé selon l'une des revendications précédentes, **caractérisé en ce que**, pendant les rétrolavages (R), on fait tourner la cartouche de filtre-tamis (3) par rapport au dispositif d'aspiration (9).

8. Procédé selon l'une des revendications précédentes, **caractérisé en ce qu'**après la fin d'un rétrolavage (R), la différence de potentiel est conservée pendant encore une durée (T₃, T₃').

9. Procédé selon la revendication 8, **caractérisé en ce que** la durée (T₃, T₃') est choisie en fonction de
- la quantité d'eau ayant circulé à travers le filtre d'eau (1) entre les deux derniers rétrolavages (R), et/ou
- le temps (T₄, T₄') passé entre les deux derniers rétrolavages (R), et/ou
- la perte de pression lors du passage du filtre d'eau (1) par le flux avant le dernier rétrolavage (R), et/ou
- la durée de phases de stagnation entre les deux derniers rétrolavages (R).

10. Procédé selon l'une des revendications précédentes, **caractérisé en ce que** la différence de potentiel est appliquée temporairement entre deux rétrolavages (R).

11. Procédé selon l'une des revendications précédentes, **caractérisé en ce que** la différence de potentiel est appliquée temporairement pendant les phases au cours desquelles il n'y a pas de circulation d'eau à travers le filtre d'eau.

12. Procédé selon l'une des revendications précédentes, **caractérisé en ce que**, en exploitation normale, la différence de potentiel est désactivée pendant, en moyenne dans le temps, plus de 95% et de préférence plus de 99% des durées des prélèvements (W) d'eau filtrée, sachant notamment que la différence de potentiel n'est pas du tout appliquée pendant les durées des prélèvements (W) d'eau filtrée,

13. Procédé selon l'une des revendications précédentes, **caractérisé en ce que**, en exploitation normale, une phase (E') de traitement par électrolyse est enclenchée lorsqu'il n'y a pas eu de démarrage d'une phase de rétrolavage (R) pendant un temps donné (T₁) depuis la dernière phase de rétrolavage (R) ou la dernière phase (E, E') de traitement par électrolyse, sachant notamment que le temps donné (T₁) est égal à au moins 48 heures.
